# EUROPEAN PATENT APPLICATION

(11) **EP 4 534 197 A1**
(43) Date of publication of application: **09.04.2025**
(21) Application number: 24757166.4
(22) Date of filing: 13.02.2024
(51) Int. Cl.: B01J 23/10, B01J 23/46, B01J 21/04, B01J 35/64, B01J 37/08, B01J 37/16, C01B 3/04

(54) **CATALYST FOR DECOMPOSITION OF AMMONIA, AND METHOD FOR DECOMPOSITION OF AMMONIA**

(30) Priority: 13.02.2023 KR 20230018962; 25.07.2023 KR 20230096826
(71) Applicant: LG Chem, Ltd., Yeongdeungpo-gu Seoul 07336 (KR)
(72) Inventor: KANG, Kyungyeon, Daejeon 34122 (KR); KIM, Heewon, Daejeon 34122 (KR); YOON, Youngchan, Daejeon 34122 (KR); KIM, Hyeonbin, Daejeon 34122 (KR); JEONG, Byeongjun, Daejeon 34122 (KR); HAN, Sangbeom, Daejeon 34122 (KR)
(74) Representative: Goddar, Heinz J.
(86) International application number: PCT/KR2024/001988
(87) International publication number: WO 2024/172438

(57) **Abstract**

The present disclosure relates to a catalyst for decomposition of ammonia and a method for decomposition of ammonia.

## Description

### [TECHNICAL FIELD]

### CROSS-REFERENCE TO RELATED APPLICATION(S)

This application claims the benefit of Korean Patent Application No. 10-2023-0018962 filed on February 13, 2023 and Korean Patent Application No. 10-2023-0096826 filed on July 25, 2023 with the Korean Intellectual Property Office, the disclosures of which are herein incorporated by reference in their entirety.

The present disclosure relates to a catalyst for decomposition of ammonia and a method for decomposition of ammonia.

### [BACKGROUND ART]

Recently, with the increasing interest in environment and energy, the issue about hydrogen economy is being also magnified.

Hydrogen economy refers to an economy industrial structure using hydrogen as a main energy source. Namely, it refers to an economic system that departs from the current energy system centering around fossil fuel, increases electric power generation system, heat production system, machine such as automobiles, and the like, utilizing hydrogen as an energy source, and newly creates industries and markets of all the fields required to stably produce, store and transport hydrogen.

In such system, water can be produced through various means such as electrolysis of water, reforming of natural gas, and gasification of biomass, and it can be dispensed through a pipeline network or transported to hydrogen fuel cells, but since direct transportation of hydrogen costs a lot and is at high risk, there is a growing interest for technology for easily and safely transporting hydrogen at a low price.

One of the methods for efficiently storing and transporting hydrogen is to transport ammonia, decompose transported ammonia and use as a hydrogen source.

Since a reaction for decomposing ammonia into hydrogen and nitrogen is an endothermic reaction with large energy difference, and the activation energy of the reaction is also very high, a lot of energy is required to obtain a useful quantity of hydrogen gas as a product, and thus, production costs of hydrogen is high.

Accordingly, there is a growing interest in the studies of a catalyst for decomposition of ammonia with high ammonia decomposition efficiency.

### [DETAILED DESCRIPTION OF THE INVENTION]

### [Technical Problem]

It is an object of the invention to provide a catalyst for decomposition of ammonia having high ammonia decomposition efficiency.

It is another object of the invention to provide a method for decomposition of ammonia using such a catalyst for decomposition of ammonia.

### [Technical Solution]

According to the present disclosure, there is provided is a catalyst for decomposition of ammonia comprising: a carrier, and catalytically active components supported on the carrier, wherein the catalytically active components comprise i) ruthenium (Ru) as a first metal; ii) lanthanum (La) as a second metal; and iii) one or more of aluminum (Al) and Cerium (Ce) as a third metal, and the catalyst has porosity of 25% or more.

According to one embodiment, the catalyst for decomposition of ammonia may have porosity of about 20% or more, or about 30% or more, and about 50% or less, or about 45% or less.

According to one embodiment, the median value of pore diameter of the catalyst for decomposition of ammonia may be about 50 to 150 µm. More specifically, the median value of pore diameter of the catalyst for decomposition of ammonia may be about 50 µm or more, or about 70 µm or more, or about 80 µm or more, or about 100 µm or more, or about 110 µm or more, and about 150 µm or less, or about 140 µm or less, or about 130 µm or less.

According to one embodiment, the carrier may be an inorganic oxide structure. More specifically, the inorganic oxide may be inorganic oxide comprising one or more elements selected from the group consisting of silicon, zirconium, aluminum, and cerium.

According to one embodiment, the first metal may be included in an amount of about 0.01 to about 0.5 parts by weight, or about 0.01 parts by weight or more, or about 0.05 parts by weight or more, or about 0.1 parts by weight or more, and about 0.5 parts by weight or less, or about 0.4 parts by weight or less, or about 0.35 parts by weight or less, or about 0.3 parts by weight or less, based on 100 parts by weight of the carrier and the catalytically active components.

According to one embodiment, the catalytically active components may be included in an amount of about 20 parts by weight or less, or about 0.1 parts by weight or more, or about 0.5 parts by weight or more, or 1 part by weight or more, and about 20 parts by weight or less, less than about 18 parts by weight, or about 15 parts by weight or less, or about 12 parts by weight or less, based on 100 parts by weight of the carrier and the catalytically active components.

According to one embodiment, the weight ratio of the (second metal):(third metal) may be about 1:99 to about 3:7, or about 1:99 or more, or about 2:98 or more, or about 3:97 or more, and about 3:7 or less, or about 25:75 or less.

According to one embodiment, the first metal may be included in an amount of about 0.1 to about 10 wt%, or about 0.1 wt% or more, or about 0.5 wt% or more, or about 1.0 wt% or more, or about 1.5 wt% or more, and about 10 wt% or less, or about 7 wt% or less, or about 5 wt% or less, or about 3 wt% or less, based on the total weight of the catalytically active components.

According to one embodiment, the catalyst for decomposition of ammonia may be in the form of a hollow cylinder.

According to one embodiment, wherein the diameter of the circular cross-section of the hollow cylinder may be about 1 to about 10mm, or about 1mm or more, 2mm or more, or about 3mm or more, or about 4mm or more, and about 10 mm or less, or about 8mm or less, or about 7mm or less or about 6mm or less.

According to one embodiment, the diameter of the hollow may be 0.1 to 0.5 of the diameter of the circular cross-section of the cylinder.

According to one embodiment, the carrier may comprise a substrate comprising alumina, and a silica layer formed on the alumina, and the catalytically active components may be included in a catalyst layer formed on the silica layer.

According to the present disclosure, also provided is a method for decomposition of ammonia comprising performing a decomposition reaction of ammonia, in the presence of any catalyst for decomposition of ammonia explained above.

According to one embodiment, the decomposition of ammonia may progress at about 400 to about 550°C, or about 400 °C or more, or greater than about 400°C, or about 420 °C or more, and about 600 °C or less, or about 550 °C or less, or about 530°C or less.

As used herein, terms "a first", "a second" and the like are used to explain various constructional elements, and they are used only to distinguish one constructional element from other constructional elements.

Further, the terms used herein are only to explain specific embodiments, and are not intended to limit the invention.

A singular expression includes a plural expression thereof, unless the context clearly indicates otherwise.

As used herein, the term "comprise", "equipped", or "have" is intended to designate the existence of practiced characteristic, number, step, constructional element or combinations thereof, and it is not intended to preclude the possibility of existence or addition of one or more other characteristics, numbers, steps, constructional elements or combinations thereof.

Further, in case it is stated that each layer or element is formed "on" or "above" each layer or element, it means that each layer or element is formed right above each layer or element, or that other layers or elements may be additionally formed between the layers or on the object or substrate.

Although various modifications can be made to the invention and the invention may have various forms, specific examples will be illustrated and explained in detail below. However, it should be understood that they are not intended to limit the invention to specific disclosure, and that the invention includes all the modifications, equivalents or replacements thereof without departing from the spirit and technical scope of the invention.

As used herein, a hollow cylinder means a cylindrical shape wherein a hole in the form of smaller cylindrical shape, passing through the circular center of the cylinder, is formed, and the circle, cylinder, and the like do not necessarily mean mathematically exact shapes.

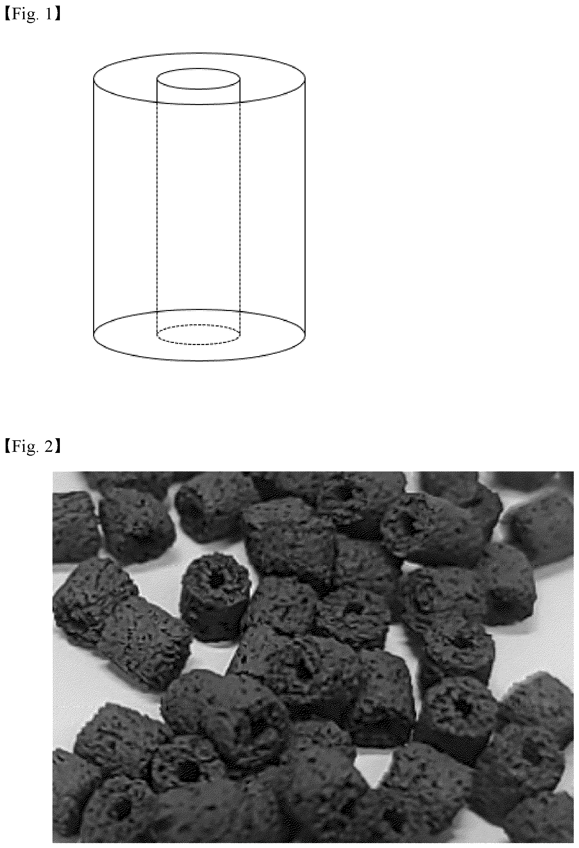

Fig. 1 schematically show the shape of a hollow cylinder of the catalyst according to one example of the invention.

Referring to Fig. 1, a hollow cylinder shape can be confirmed.

According to one aspect of the invention, provided is a catalyst for decomposition of ammonia comprising: a carrier, and catalytically active components supported on the carrier, wherein the catalytically active components comprise i) ruthenium (Ru) as first metal; ii) lanthanum (La) as second metal; and iii) one or more of aluminum (Al) and Cerium (Ce) as third metal, and the catalyst has porosity of 25% or more.

The inventors of the present disclosure have found that when catalytically active components are supported on a carrier of a specific shape to prepare a catalyst having specific pore characteristics, such a catalyst can achieve very high efficiency as a catalyst for decomposition of ammonia, and completed the invention.

The decomposition of ammonia may be represented by the following Reaction Formula. 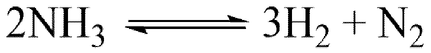 d

This reaction is a reversible process, and can obtain3 molecules of hydrogen gas from 2 molecules of ammonia, and in general, if the reaction is performed under high temperature and high pressure conditions in the presence of a catalyst, a forward reaction may become dominant, and thus, the entire ammonia may be decomposed while leaving only a trace amount of undecomposed ammonia.

However, since this forward reaction is an endothermic reaction with large energy difference between the product and reactant, and the activation energy of the reaction is very high, reaction efficiency is not high, and a lot of energy is required.

Thus, according to the embodiment of one aspect of the invention, a catalyst for decomposition of ammonia comprising a carrier, and catalytically active components supported on the carrier, wherein the catalytically active components comprise i) ruthenium (Ru) as first metal; ii) lanthanum (La) as second metal; and iii) one or more of aluminum (Al) and cerium (Ce) as third metal, and having porosity of 25% or more, is used.

As catalytically active components, ruthenium, lanthanum, aluminum, and cerium and the like may be used in the form of complex metal oxide. Wherein, the complex metal oxide means a compound or a mixture wherein 2 or more kinds of the metal elements mentioned as the catalytically active components are mixed at the same or different oxidation numbers.

Among such catalytically active components, ruthenium is known as a metal directly mediating the reaction, and lanthanum, aluminum, and cerium, and the like may function as a kind of a cocatalyst.

Further, the catalyst for decomposition of ammonia according to one aspect of the invention, in one embodiment, has a porous shape with porosity of 25% or more. By using a porous catalyst, a surface area where catalytically active material can contact reactants may be increased, and heat aggregation of the catalytically active material can be prevented, thereby improving the lifespan of the catalyst.

According to one embodiment, the catalyst for decomposition of ammonia may have porosity of about 20% or more, or about 30% or more, and about 50 % or less, or about 45% or less.

If porosity is too low, reactant, namely ammonia may not contact catalytically active components existing inside a catalyst structure, and thus, efficiency of ammonia decomposition reaction may be lowered, and if porosity is too high, strength of the catalyst may be lowered, thereby generating property deterioration.

According to one embodiment, the median value of pore diameter of the ammonia decomposition catalyst may be about 50 to about 150 µm. More specifically, the median value of pore diameter of the ammonia decomposition catalyst may be about 50 µm or more, or about 70 µm or more, or about 80 µm or more, or about 100 µm or more, or about 110 µm or more, and about 150 µm or less, or about 140 µm or less, or about 130 µm or less.

If the median value of pore diameter is too small, smooth reactant flow may not be formed in the catalyst, and thus, differential pressure may be generated in an ammonia inlet, thereby lowering reaction efficiency. If the median value of pore diameter is too large, specific surface area of the catalyst may decrease, and contact area between the reactant and catalyst may decrease, and thus, reaction efficiency may be lowered.

Further, within the above range, the required amount of noble metal ruthenium supported may be minimized, and simultaneously, efficiency of ammonia decomposition reaction may be increased, and lifespan of the catalyst may be improved.

According to one embodiment, the carrier may be an inorganic oxide structure. More specifically, the inorganic oxide may be inorganic oxide comprising one or more elements selected from the group consisting of silicon, zirconium, aluminum, and cerium.

According to one embodiment, the first metal may be included in an amount of about 0.01 to about 0.5 parts by weight, or about 0.01 parts by weight or more, or about 0.05 parts by weight or more, or about 0.1 parts by weight or more, and about 0.5 parts by weight or less, or about 0.4 parts by weight or less, or about 0.35 parts by weight or less, or about 0.3 parts by weight or less, based on 100 parts by weight of the carrier and the catalytically active components.

If the amount of the first metal is too small, efficiency of the ammonia decomposition reaction may be lowered, and if the amount of the first metal is too high, in the process of increasing a coating amount to increase the amount of the first metal, the pores of the porous catalyst structure may be blocked, and smooth reactant flow may not be formed in the catalyst, and thus, a differential pressure may be generated in an ammonia inlet, and thereby, reaction efficiency may be lowered, and costs may increase.

According to one embodiment, the amount of the total catalytically active components, namely, the first metal, second metal, and third metal may be about 20 parts by weight or less, or about 0.1 parts by weight or more, or about 0.5 parts by weight or more, or about 1 parts by weight or more, and about 20 parts by weight or less, less than about 18 parts by weight, or about 15 parts by weight or less, or about 12 parts by weight or less, based on 100 parts by weight of the carrier and the catalytically active components.

If the amount of the catalytically active components is too low, active sites of the ammonia decomposition reaction may decrease, and thus, efficiency of the ammonia decomposition reaction may be lowered, and if the amount of the catalytically active components is too high, the pores of the porous catalyst structure may be blocked, and smooth reactant flow may not be formed in the catalyst, and thus, a differential pressure may be generated in an ammonia inlet, and thereby, reaction efficiency may be lowered to the contrary.

According to one embodiment, the weight ratio of the (second metal):(third metal) may be about 1:99 to about 3:7, or about 1:99 or more, or about 2:98 or more, or about 3:97 or more, and about 3:7 or less, or about 25:75 or less.

As explained above, among the catalytically active components, ruthenium is known to directly mediate the ammonia decomposition reaction, and lanthanum, aluminum, and cerium, and the like may function as a kind of a cocatalyst.

Since ruthenium directly mediating the ammonia decomposition reaction is attached to acid sites of the inorganic oxide carrier surface, acid sites should be uniformly distributed on the surface of the inorganic oxide carrier so that ruthenium may be uniformly dispersed on the surface of the carrier.

However, the inorganic oxide structure used as a carrier is often heat treated at high temperature of about 900 °C or more to secure strength, and in such a heat treatment process, acid sites of the inorganic oxide structure surface may disappear, and thus, if ruthenium is directly supported on a common carrier, it may not be uniformly dispersed on the surface of the inorganic oxide structure, but may be supported in the form of large particles, and thereby, the surface area of ruthenium on the catalyst surface may become narrow, and efficiency of the ammonia decomposition reaction may be also lowered.

In the complex metal oxide comprising third metal as explained above, acid sites by the third metal may be uniformly distributed on the surface, and thus, ruthenium may be uniformly dispersed and supported, and the surface area of ruthenium on the catalyst surface may be increased.

The second metal may exist in a stable state in the oxide crystal lattice of the third metal, and may function for assisting in smooth progression of nitrogen-nitrogen rebinding during the ammonia decomposition reaction. Further, the second metal may isolate reaction active sites formed by ruthenium bound to the acid sites of the third metal, to prevent aggregation of neighboring ruthenium while the ammonia decomposition reaction progresses, thereby increasing lifespan of the catalyst.

In this respect, it may be preferable that the weight ratio of the second metal and third metal may be maintained within the above-explained range.

According to one embodiment, the first metal may be included in an amount of about 0.1 to about 10 wt%, or about 0.1 wt% or more, or about 0.5 wt% or more, or about 1.0 wt% or more, or about 1.5 wt% or more, and about 10 wt% or less, or about 7 wt% or less, or about 5 wt% or less, or about 3 wt% or less, based on the total weight of the catalytically active components.

According to one embodiment, in the complex metal oxide comprising the catalytically active first metal, second metal and third metal, the mole ratio of the first metal may be about 0.1 to about 10, or about 1 to about 5, or about 2 to about 5, the mole ratio of the second metal may be about 0.1 to about 20, or about 0.5 to about 15, or about 1 to 10, and the mole ratio of the third metal about 0.1 to about 35, or about 1 to about 30, or about 3 to about 25.

According to one embodiment, the catalyst for decomposition of ammonia may be in the form of a hollow cylinder
The hollow cylinder means a cylindrical shape wherein a hole in the form of smaller cylindrical shape, passing through the circular center of the cylinder, is formed, and the terms circle, cylinder, and the like do not necessarily mean mathematically exact shapes.

Fig. 1 schematically show the shape of a hollow cylinder of the catalyst according to one example of the invention.

Referring to Fig. 1, a hollow cylinder shape can be confirmed.

According to one embodiment, the diameter of the circular cross-section of the hollow cylinder may be about 1 to about 10mm, or about 1mm or more, 2mm or more, or about 3mm or more, or about 4mm or more, and about 10 mm or less, or about 8mm or less, or about 7mm or less or about 6mm or less.

If the diameter of the circular cross-section of the hollow cylinder is too large, catalyst filling density may be lowered, and reactant ammonia gas may pass it through without sufficiently contacting the catalyst, and thus, reaction efficiency may be lowered, and if the diameter of the circular cross-section of the hollow cylinder is too small, catalyst filling density may become too high, and thus, a differential pressure may be generated, thereby lowering reaction efficiency.

According to one embodiment, the diameter of a hollow in the hollow cylinder, namely, a central pore crossing the cylinder, may be 0.1 to 0.5 of diameter of the circular cross-section of the cylinder.

If the diameter of the central pore is too large, the volume of the catalyst structure may relatively increase, and thus, the amount of catalytically active components introduced in a reactor may relatively decrease, and mechanical strength of the catalyst structure may be deteriorated, and if the diameter of the central pore is too small, a differential pressure may be generated, thus lowering reaction efficiency, or local cooling sites may be generated in the endothermic ammonia decomposition reaction, thus also lowering reaction efficiency.

According to one embodiment, in the catalyst, the carrier comprises a substrate comprising alumina, and a silica layer formed on the alumina, wherein the catalytically active components are included in a catalyst layer formed on the silica layer.

If a catalyst has such a structure, catalytically active components may be coated not only on the surface of the carrier, but also on the internal pores, thereby increasing dispersion degree of the catalyst, and thus, even if a small amount of catalytically active components are used, high reaction activity may be exhibited.

Meanwhile, the above-explained catalyst may be prepared by the following method.

First, an aqueous solution of ruthenium salt is prepared. Wherein, as the aqueous solution of ruthenium salt, an aqueous solution of ruthenium fluoride, an aqueous solution of ruthenium chloride, an aqueous solution of ruthenium nitrate, an aqueous solution of ruthenium sulfate, an aqueous solution of perruthenic acid ion, and the like may be mentioned.

Further, La-Ceria power, or La-Alumina powder is added thereto, and a basic condition is created using ammonia water, and the like. It is filtered and washed, and dried in an oven of about 100 to about 150 °C for about 6 to about 20 hours to obtain powders.

To the obtained powders, distilled water is added, zirconia balls are added, and they are stirred in a roller to prepare a slurry.

In the slurry solution, a carrier is soaked, and then, the remaining solution is completely removed using an air gun, and dried in an oven of about 100 to about 150 °C for about 6 to about 20 hours. It is weighed to confirm the amount of coated catalytically active components, and the process of coating the slurry solution is further repeated three times, thus obtaining a supported catalyst wherein the above-explained first, second and third metals are supported on a carrier.

Meanwhile, the supported catalyst prepared by the above method may be used as a catalyst for decomposition of ammonia as it is, or it may be calcined or reduced and used as a catalyst for decomposition of ammonia.

In the calcination and reduction, calcination and reduction conditions commonly used in the technical field to which the invention pertains, such as treating the obtained catalyst with hydrogen gas under conditions of about 300 to about 400 °C, may be used.

Further, according to the present disclosure, also provided is a method for decomposition of ammonia comprising progressing an ammonia decomposition reaction, in the presence of any catalyst for decomposition of ammonia explained-above.

In the method for decomposition of ammonia according to one embodiment of the invention, reaction conditions commonly used in the technical field to which the invention pertains may be used, except using the catalyst according to one embodiment of the invention.

According to one embodiment of the invention, the ammonia decomposition reaction may be performed under temperature conditions of about 400 to about 550 °C, or about 400°C or more, or greater than about 400 °C, or about 420 °C or more, and about 600 °C or less, or about 550°C or less, or about 530 °C or less.

According to another embodiment, the ammonia decomposition reaction may be performed after purging with inert gas, before the main reaction.

Further, in the reaction, the form of a reactor is not specifically limited, and a reactor of a suitable form that can instill ammonia gas in the catalyst of the above-explained shape, and directly contact the catalyst with reactant, may be selected and used.

### [ADVANTAGEOUS EFFECTS]

According to the present disclosure, provided is a catalyst for decomposition of ammonia with high ammonia decomposition efficiency.

According to the present disclosure, also provided is a method for decomposition of ammonia using such a catalyst for decomposition of ammonia.

### [BRIEF DESCRIPTION OF THE DRAWINGS]

Fig. 1 schematically shows the shape of a hollow cylinder of the catalyst according to one embodiment of the invention.
Figs. 2 to 4 are photographs showing the catalysts according to the Examples and Comparative Examples.
Figs. 5 and 6 are images of the catalyst prepared in Comparative Examples 4 and 5, respectively.
Fig. 7 is the SEM image of the catalyst prepared in Example 1.
Figs. 8 and 9 are the SEM images of the catalysts prepared in Comparative Examples 4 and 5, respectively.
Fig. 10 is the SEM-EDS image of the catalyst prepared in Example 1.
Figs. 11 and 12 are the SEM-EDS images of the catalysts prepared in Comparative Examples 4 and 5, respectively.

### [DETAILED DESCRIPTION OF THE EMBODIMENTS]

Hereinafter, the actions and effects of the invention will be explained in detail through specific examples of the invention. However, these examples are presented only as the illustrations of the invention, and the scope of the right of the invention is not determined thereby.

### <Examples>

### Examples 1 to 5 and Comparative Example 1

As the source of metal component, LaCeria synthesized by coprecipitation, or commercial LaAlOx (material:LaAlOx; manufacturing company:Sasol; product name: SCFa-145AL4) was used.

The material was added to distilled water and stirred at 300rpm for 30 minutes, and then, ruthenium chloride hydrate was added considering the amount of each metal element in the catalytically active component, and additionally stirred for 30 minutes. The pH was adjusted to 9 with ammonia water, and then, it was stirred for 18 hours using a stirrer and a magnetic bar. It was filtered and washed with water until the filtered liquid became neutral, and put in an oven of 110 °C and dried about 6 hours to obtain powders.

18g of the powders obtained above were put in a milling device, and using 300g of zirconia balls with diameter of 3mm and 60g of zirconia balls with diameter of 5mm, ball-milled in a 200rpm roller for 6 hours to control the particle size.

Thereafter, 79.2g of distilled water and 1.8g of Boehmite were added, and stirred in a 200rpm roller for 6 hours. To dissolve Beohmite and use it as a binder, the pH was adjusted to 3.5 with a 60% nitric acid solution.

In the solution, about 50g of ceramic hollow cylinders including a silica coating layer formed on an alumina substrate (material: Ceramic rings; manufacturing company: Saint Gobain NorPro; product name: SA5518) were added as a carrier and coated, and then, the remaining solution was removed using an air gun.

It was put in an oven of about 110°C and dried for about 6 hours. The drying and coating were repeated until 10wt% of the coated catalyst became powders. As the result, a molded catalyst wherein the catalyst is coated on the surface of the ceramic hollow cylinders was obtained.

The metal components in the obtained catalyst material were analyzed by ICP-OES, and structure change of the carrier was confirmed through Hg porosity.

Fig. 2 is the image of the catalyst prepared in Example 1. Referring to Fig. 2, a catalyst of a hollow cylinder shape can be confirmed.

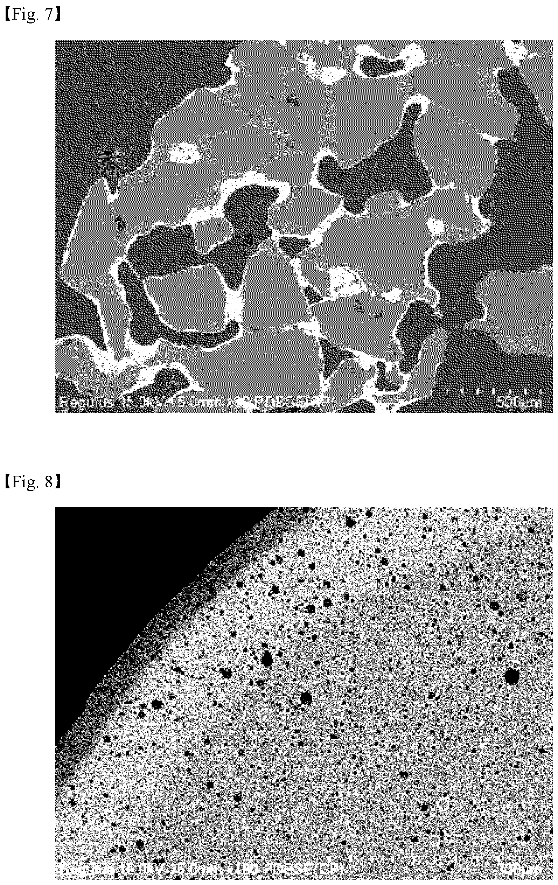

Fig. 7 is the SEM image of the catalyst prepared in Example 1. In the SEM image of the catalyst of Example 1, white, light gray, and dark gray colors can be observed, except a black background. They correspond to a dark gray-alumina substrate, a light gray-silica layer, and a white-catalyst layer, respectively, and the layered structure of the catalyst according to one example of the invention, comprising a substrate comprising alumina; a silica layer formed on the alumina; and a catalyst layer formed on the silica layer, can be clearly confirmed therethrough.

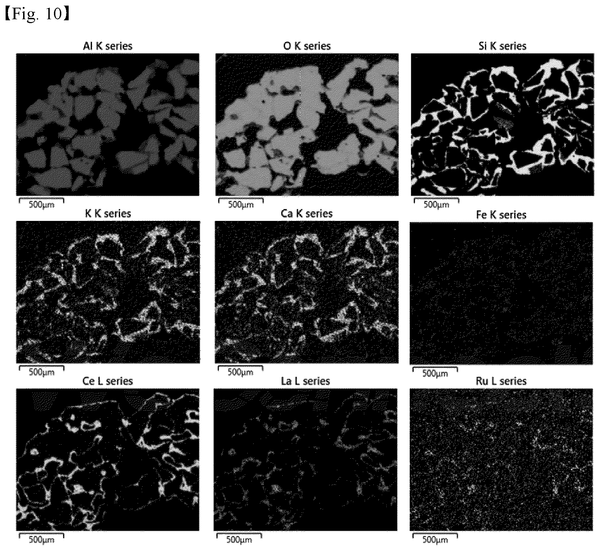

Fig. 10 is the SEM-EDS images of the catalyst prepared in Example 1. In the SEM-EDS images, distribution of each element of ruthenium, lanthanum and cerium in the catalyst can be confirmed, and particularly, the amount of ruthenium, which is the main active sites of the catalyst, is low in the whole catalyst and it appears as a light color, but it can be clearly confirmed that it is uniformly dispersed over the whole catalyst.

### Comparative Examples 2 and 3

The same process as Examples 1, 2 and Comparative Example 1 was performed, except that supporting was not performed, and the obtained powder itself was molded to prepare a catalyst.

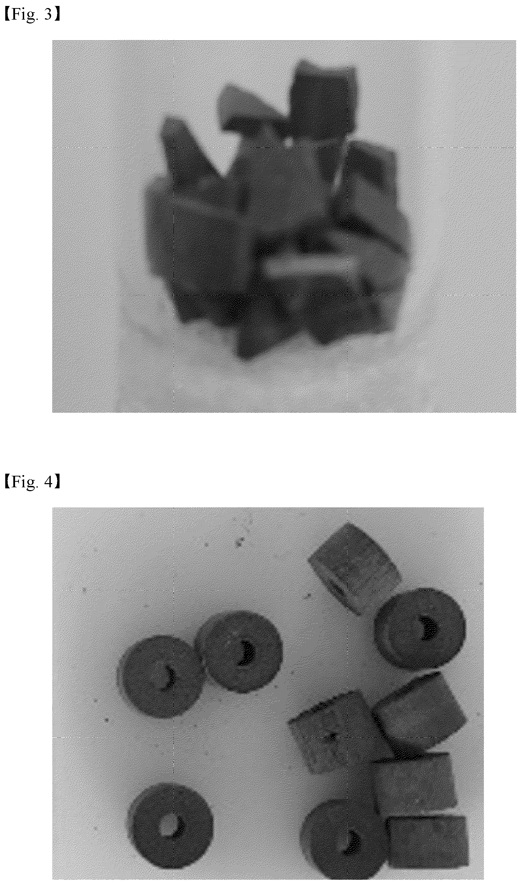

Fig.3 and Fig. 4 are the photographs of unsupported catalysts prepared according to Comparative Examples 2 and 3, respectively.

### Comparative Example 4

The same process as Example 1 was performed to obtain a spherical supported catalyst, except that i) spherical alumina was used as a carrier, and ii) potassium was added as an accelerating component.
Ru(0.5)/Al₂O₃; in the final catalyst, ruthenium content 0.5wt%

### Comparative Example 5

The same process as Example 1 was performed to obtain a spherical supported catalyst, except that spherical alumina was used as a carrier.
Ru(1.5)/Al₂O₃; in the final catalyst, ruthenium content 1.5wt%

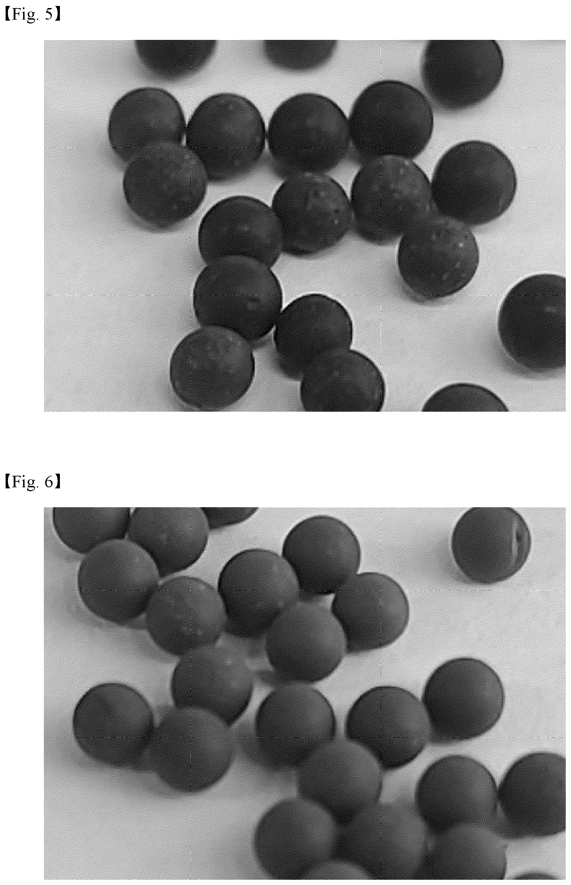

Figs. 5 and 6 are the images of catalysts prepared in Comparative Examples 4 and 5, respectively. Referring to Figs. 5 and 6, a spherical supported catalyst can be confirmed.

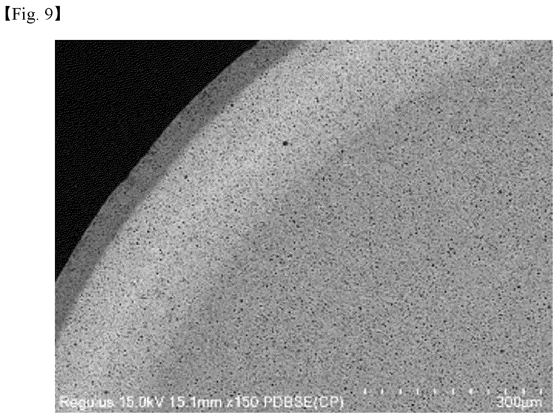

Figs. 8 and 9 are the SEM images of catalysts prepared in Comparative Examples 4 and 5, respectively. In the SEM images of the catalysts prepared in Comparative Examples, light gray and dark gray colors can be observed, except a black background. They are confirmed as a dark gray-alumina substrate, and a light gray-catalyst layer, respectively.

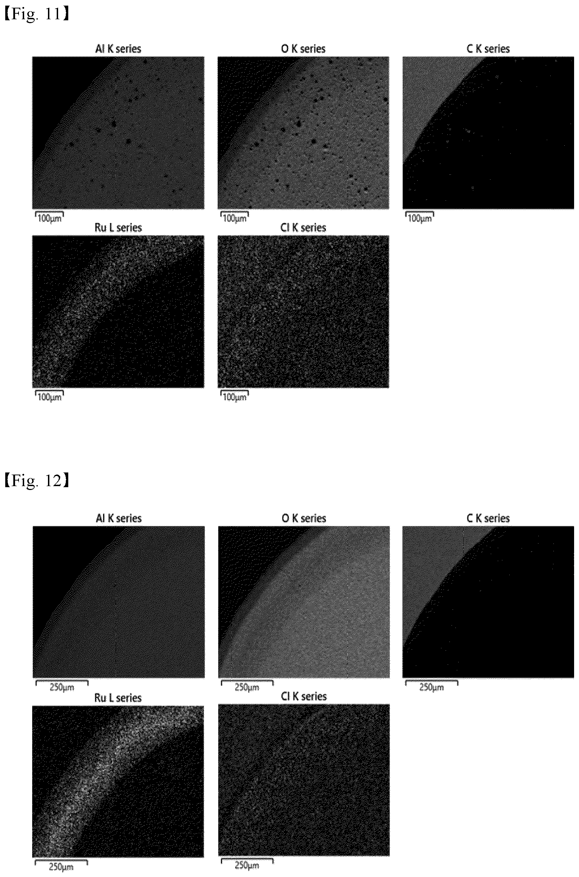

Figs. 11 and 12 are the SEM-EDS images of catalysts prepared in Comparative Examples 4 and 5, respectively. In the SEM-EDS, distribution of each element of ruthenium, lanthanum, and potassium, and the like can be confirmed, and particularly, it can be clearly confirmed that the main active site of the catalyst, ruthenium, is distributed only on the catalyst surface.

The information of the obtained catalysts are summarized in the following Table 1.

**[Table 1]**

| | **Catalyst construction** | | | | **Catalyst shape** | |
|---|---|---|---|---|---|---|
| | Ru content (unit:wt%) | *empirical formula | Amount of catalyst supported (wt%) | Amount of carrier (wt%) | Cylinder diameter (mm) | Central pore diameter (mm) |
| Example 1 | 0.11 | Ru_{3.5}/La_{6.2}Ce_{20.7}O₇₀ | 5 | 95 | 4.4 | 1.2 |
| Example2 | 0.16 | Ru_{3.5}/La_{6.2}Ce_{20.7}O₇₀ | 7 | 93 | 4.4 | 1.2 |
| Example3 | 0.21 | Ru_{3.5}/La_{4.0}Ce_{22.8}O₇₀ | 10 | 90 | 4.4 | 1.2 |
| Example4 | 0.22 | Ru_{2.15}/La_{1.56}Al_{3.76} O_{58.7} | 8 | 92 | 5.5 | 3.0 |
| Example5 | 0.25 | Ru_{2.15}/La_{1.56}Al_{3.76} O_{58.7} | 10 | 90 | 4.4 | 1.2 |
| Example6 | 0.25 | Ru_{3.5}/La_{4.0}Ce_{22.8}O₇₀ | 12 | 88 | 4.4 | 1.2 |
| Comparative Example 1 | 0.37 | Ru_{3.5}/La_{6.2}Ce_{20.7} O₇₀ | 18 | 84 | 4.4 | 1.2 |
| Comparative Example2 | 2.22 | Ru_{3.5}/La_{6.2}Ce_{20.7} O₇₀ | 100 | 0 | 1~3 | - |
| Comparative Example3 | 2.25 | Ru_{3.5}/La_{6.2}Ce_{20.7} O₇₀ | 100 | 0 | 3 | 1 |

| | | | | | | |
|---|---|---|---|---|---|---|
| *In the empirical formula, the numerical coefficients indicate mole ratio of each element. | | | | | | |

### Analysis of pore characteristics

Using a mercury intrusion porosimeter (manufacturing company: Micromeritics; model name: AutoPore V), the pore characteristics of the catalysts prepared in the Examples and Comparative Examples were analyzed according to mercury porosimetry.

An appropriate amount of a sample was put in a sample cell without a separate pre-treatment process, and then, pressurized under 0.2 to 33,000 psi to force mercury into the catalyst pores, and the pore volume was measured. The median value of the values obtained by analysis was used as an average diameter.

**[Table 2]**

| | **Pore properties** | | |
|---|---|---|---|
| | Pore size (median value, µm) | Pore volume (g/cc) | Porosity (%) |
| Example 1 | 111 | 0.21 | 42 |
| Example2 | 128 | 0.19 | 40 |
| Example3 | 129 | 0.16 | 37 |
| Example4 | 118 | 0.18 | 38 |
| Example5 | 111 | 0.15 | 35 |
| Example6 | 115 | 0.17 | 37 |
| Comparative Example 1 | 73 | 0.09 | 24 |
| Comparative Example2 | 0.04 | 0.015 | 0.07 |
| Comparative Example3 | 0.04 | 0.015 | 0.07 |

### Ammonia decomposition reaction

Each 3g of the catalysts prepared in the Examples and Comparative Examples was filled in a OD 1/2" reactor, and the temperature was raised to 350 °C using nitrogen gas, and then, hydrogen/nitrogen mixed gas (hydrogen 50v%) was flowed at the corresponding temperature for about 1 hour for reduction treatment.

The reduction treated catalyst was purged under nitrogen atmosphere of about 350 °C for about 30 minutes, and while flowing 99.99% of ammonia gas at 10sccm, the temperature of the reaction system was raised to about 500 °C, and the ammonia decomposition rate was analyzed at intervals of 50 °C.

The analysis results were summarized in the following Table 3.

**[Table 3]**

| | NH₃ conversion rate according to temperature | | | Differential pressure characteristics of catalyst | Catalyst layer temperature difference | Catalyst strength |
|---|---|---|---|---|---|---|
| | 400°C | 450°C | 500°C | 500°C | 500°C | N |
| Example 1 | 42 | 90 | 99.7 | 0 | 5 | 68 |
| Example2 | - | 96 | 99.6 | 0 | 3 | 52 |
| Example3 | 40 | 97 | 99.8 | 0 | 3 | 53 |
| Example4 | 41 | 98 | 99.8 | 0 | 5 | 37 |
| Example5 | 38 | 95 | 99.8 | 0 | 3 | 57 |
| Example6 | 39 | 92 | 99.5 | 0 | 3 | 55 |
| Comparative Example 1 | 9 | 36 | 93.1 | 0.7 | 7 | 50 |
| Comparative Example2 | 30 | 68 | 89.6 | 0.3 | 20 | <1 |
| Comparative Example3 | 36 | 72 | 91.7 | 0.2 | 16 | 10 |
| Comparative Example4 | 8 | 79 | 92 | 0.5 | 8 | 50 |
| Comparative Example5 | 8 | 83 | 93.9 | 0.5 | 8 | 49 |

For the conversion rate, outlet gas discharged from the reactor was analyzed by GC, the ratio of the volume of NH₃ to the volume of total discharged gas was calculated (n), and conversion rate was calculated as follows: conversion rate=(1-n)/(1+n).

For the differential pressure characteristic of the catalyst, pressure transmitters were installed at the front end and back end of the reactor, the pressures were measured, and a pressure difference between the front end/back end was calculated.

The catalyst layer temperature difference is a temperature difference between the temperature of a furnace used for heating of the reactor and the internal temperature of the catalyst layer, and was measured by putting a thermocouple (TC) at the center of the catalyst layer.

For the catalyst strength, compression strength was measured using a pressure sensor (FGN-50B, SHIMPO) when an object sample was crushed, the measurement was repeated 20 times for each example, and the mean value was shown.

As shown in the Table 3, the catalysts according to the Examples of the present disclosure have very high ammonia conversion rates, and have little pressure difference between the front end and back end of the reactor. It means that gas flow at the catalyst filling part of the reactor is very smooth.

Further, it can be confirmed that in the case of the Examples, catalyst strength is high, and catalyst layer temperature difference is very small.

It can be confirmed that in the case of the Comparative Examples, ammonia conversion rates do not meet Examples, and a constant pressure difference is generated at the front end and back end of the reactor. It means that gas flow at the catalyst filling part of the reactor is not smooth.

In certain Comparative Examples, catalyst strength is low, and in this case, it is thought that the catalyst located at the lower part of the catalyst filling part cannot withstand the weight and pressure and is broken, and the catalyst filling part may be crashed down.

Further, it can be confirmed that the Comparative Examples have large catalyst layer temperature differences compared to the Examples, and as such, in case catalytically active materials are densely filled, reactions (endothermic) may rapidly occur to significantly lower temperature at the center of the catalyst filling part, thereby remarkably lowering reaction activity.

## Claims

1. A catalyst for decomposition of ammonia comprising
a carrier; and
catalytically active components supported on the carrier,
wherein the catalytically active components comprise:
i) ruthenium (Ru) as a first metal;
ii) lanthanum (La) as a second metal; and
iii) one or more of aluminum (Al) and Cerium (Ce) as a third metal, and
the catalyst has porosity of 25% or more.

2. The catalyst for decomposition of ammonia according to claim 1, wherein the median value of pore diameter is 50 to 150 µm.

3. The catalyst for decomposition of ammonia according to claim 1, wherein the carrier is an inorganic oxide structure.

4. The catalyst for decomposition of ammonia according to claim 1, wherein the first metal is included in an amount of 0.01 to 0.5 parts by weight, based on 100 parts by weight of the carrier and the catalytically active components.

5. The catalyst for decomposition of ammonia according to claim 1, wherein the catalytically active components are included in an amount of 20 parts by weight or less, based on 100 parts by weight of the carrier and the catalytically active components.

6. The catalyst for decomposition of ammonia according to claim 1, wherein a weight ratio of the (second metal):(third metal) is 1:99 to 3:7.

7. The catalyst for decomposition of ammonia according to claim 1, wherein the first metal is included in an amount of 0.1 to 10 wt%, based on the total weight of the catalytically active components.

8. The catalyst for decomposition of ammonia according to claim 1, wherein the catalyst is in the form of a hollow cylinder.

9. The catalyst for decomposition of ammonia according to claim 8, wherein a diameter of the circular cross-section of the hollow cylinder is 1 to 10mm.

10. The catalyst for decomposition of ammonia according to claim 8, wherein a diameter of the hollow is 0.1 to 0.5 of the diameter of the circular cross-section of the cylinder.

11. The catalyst for decomposition of ammonia according to claim 1, wherein the carrier comprises a substrate comprising alumina, and a silica layer formed on the alumina, and
the catalytically active components are included in a catalyst layer formed on the silica layer.

12. A method for decomposition of ammonia, comprising performing a decomposition reaction of ammonia in the presence of the catalyst for decomposition of ammonia according to any one of claims 1 to 11.

13. The method for decomposition of ammonia according to claim 12, wherein the method progresses at 400 to 600°C.
